# EUROPEAN PATENT APPLICATION

(11) **EP 2 241 471 A2**
(43) Date of publication of application: **20.10.2010**
(21) Application number: 10155403.8
(22) Date of filing: 03.03.2010
(51) Int. Cl.: B60K 35/00

(54) **Improvements in vehicle displays**

(30) Priority: 03.03.2009 GB 0903537
(71) Applicant: Nissan Motor Manufacturing (UK) Ltd., Cranfield Bedfordshire MK43 0DB (GB)
(72) Inventor: Ray, Paul, Bedford, Bedfordshire MK43 0DB (GB)

(57) **Abstract**

An instrument cluster for a vehicle comprising: first display means for displaying first information to a driver; second display means for displaying second information to the driver; and third display means extending between the first and second display means and arranged to selectively display the first or second information. The third display means is curved in a plane normal to a display surface thereof such that at least a portion of the third display means is positioned closer to the driver than the first and second display means.

## Description

### Field of the invention

The present invention relates to a display for a vehicle and, more specifically, to an information display for a vehicle instrument panel with at least three displays one of which being positioned between the other two.

### Background of the invention

The present invention relates to an instrument cluster or combimeter for a vehicle and, in particular, to a combimeter with a tiered display which allows the user view more information in a smaller packaging space.

Stacking a set of dials or displays behind a steering wheel, to display information about the vehicle and the journey to the driver, is well known and is commonly used in modern motor vehicles. However, as vehicles become more complicated and customers demand more sophisticated interaction with the vehicle, the challenge is to present the information in an ever more clear and legible way. In some cases, the dials and displays are stacked vertically so that the most important display, such as the speedometer is presented nearest to the driver, with less critical information being presented on a plane further away from the driver.

In some cases, vehicle manufacturers have elected to augment clusters of dials with liquid crystal displays (LCD). In these cases the commonly used information, such as vehicle speed, is displayed on dedicated dials and the LCD is used to display other information. In some instances, the information presented on this display may be configured by the user so as to display information such as fuel economy or navigation data. The problem associated with these displays is that each display, dial or LCD, must have a dedicated amount of space available to it in the instrument cluster in order for the information presented to be clearly visible. In some cases, dials which are typically circular in shape have portions of their periphery which would not display useful information, (speeds of over 150mph for small family cars or over 6000rpm for a diesel engine). In these cases, vehicle manufacturers have used these portions of otherwise unused display area and pushed the dials closer together until they overlap, effectively merging one circular dial towards another forming a series of arcs. In such examples the dials typically occupy the same plane, and any labelling or numerals around the periphery of the dials are printed onto a shared display card.

Whilst merging or stacking of the dials and displays is known there is still much effort by the motor industry to improve upon the currently available layout of instrument clusters or combimeter.

It is against this background that the present invention seeks to improve upon the known instrument display for a vehicle by providing an instrument cluster with multiple displays, at least two of which are jointed by a third display arranged to allow information to be transferred between the first display and the second via the third.

### Summary of the invention.

According to an aspect of the present invention there is provided an instrument cluster for a vehicle comprising: first display means for displaying first information to a driver; second display means for displaying second information to the driver; and third display means extending between the first and second display means and arranged to selectively display the first or second information; wherein the third display means is curved in a plane normal to a display surface thereof such that at least a portion of the third display means is positioned closer to the driver than the first and second display means.

Advantageously, the present invention provides a three-dimensional surface on which to display information to the user. This three-dimensional surface is provided with multiple discrete surfaces or facets on which information may be presented to the user, with one surface being arranged closest to the user in a prominent position. The display closest to the driver is arranged between other information displays and has a three-dimensional surface arranged to allow information to be displayed across multiple display surfaces as if they were continuous of which, information of particular importance may be displayed on a display surface positioned in a more prominent position relative to the user than the other displays. This provides a relatively compact means of displaying information to the user which is highly legible yet intuitive to the user.

According to an embodiment, the first, second and third display means operate in the manner of a single display such that information may be scrolled:
from the first display means or the second display means to the third display means; and/or
between the first and second display means via the third display means.

Advantageously, the display closest to the driver is arranged between other information displays and has a three-dimensional surface arranged to allow information to be scrolled from one display to another via the three-dimensional surface of the display between them. This provides a relatively compact means of displaying regularly updated information to the user. Scrolling information as it is updated in this way, tends to get the attention of the user faster than a flashing display, as human awareness is naturally drawn to the movement of an image. In this way, the movement of the new information scrolling across the display to replace the old information alerts the user that the information has been updated.

According to an embodiment, the portion of the third display means that is positioned closer to the driver is a central portion of the third display means.

According to an embodiment, the central portion of the third display means is arranged to enlarge or otherwise emphasise information displayed thereat to the driver.

Advantageously, this improves upon the intuitiveness of the display. If the predominant portion of the display is closer to one adjacent display than another the information displayed across the predominant portion is interpreted as relating to the closest adjoining display only. In addition, if the predominant portion of the display is offset it greatly affects the legibility of the information displayed upon if it is scrolling. This is because the user will use the portion of the display leading up to the predominant portion to focus on the information and read it once it is displayed in the predominant portion.

According to an embodiment, the instrument cluster of the present invention further comprising a first vehicle meter and a second vehicle meter, wherein:
the first display means comprises a central region of the first vehicle meter which at least partially surrounds the first display means; and
the second display means comprises a central region of the second vehicle meter which at least partially surrounds the second display means.

Advantageously, providing an information display within the otherwise unused central region within a vehicle meter or set of meters, optimises the use of space available within a given packaging area on which to display information to the user.

According to an embodiment, the first and second vehicle meters are arranged to display one or more of the following parameters:
vehicle speed, engine speed, oil temperature, oil pressure, water temperature, battery status, fuel status and drive mode.

According to an embodiment, the first and second vehicle meters are configured to present information by means of a moving dial pointer arranged to indicate a value by pointing at corresponding indicia arranged around the first and second meters, respectively.

Advantageously, the present invention compliments the combination of traditional analogue meters, arranged to present only one type of information and modern digital displays such as LCD, LED or OLED displays, arranged to present a range of information. The instrument cluster of the present invention provides the user with an area on which information is displayed using methods of displaying information which are best suited to presenting that information in an intuitive manner.

According to an embodiment, the first and/or second information is configurable by the user.

According to an embodiment, the third display means is arranged to display the first and/or second information in a format configured by the user.

Advantageously, providing an instrument cluster with display zones that may be configured by the user allows for one instrument cluster to be shared across several vehicles with differing specifications. Sharing the instrument cluster reduces parts complexity and associated costs. The instrument cluster may be shared because the vehicle manufacturer may readily select different display modes for each vehicle during the assembly process. Additionally, the user may wish to display or highlight specific information on the instrument cluster depending on the specific journey or task being completed by the vehicle.

According to an embodiment, at least one of the first, second and third display means comprises a three-dimensional display surface.

Advantageously, displaying information on a three-dimensional display optimises the use of space available to present information to the user. This presents a significant benefit over conventional two-dimensional display formats.

According to an embodiment, at least part of the third display means is arranged to span between the first and second display means and wherein the first and second display means are arranged to display information on a first plane and the third display means arches from the first plane where it meets the first and second display means to a second plane positioned closer to the driver than the first plane.

Advantageously, the instrument cluster of the present invention provides a three-dimensional surface on which to display information. The prominent display surface may span adjacent display zones, bridging over meter bezels or raised surfaces or connecting displays presenting information on different planes relative to the driver. The instrument cluster of the present invention avoids having to compromise the styling, clarity or layout of the instrument cluster normally associated with tiered or layered combimeters.

According to a further aspect, there is provided a method of presenting information, the method comprising: displaying a first piece of information on a first information display; and displaying a second piece of information on a second information display which is bordered on at least two sides by indicia of the first display, wherein the second information display is divided into at least two display zones and a third information display provides a link between the two display zones to form a continuous area on which information may be displayed between the two display zones and, wherein the third information display is curved to join the two display zones at a first plane whilst presenting at least a part of the information on a second plane on an area of the third display between the two display zones.

Advantageously the method provides the user with all of the aforementioned benefits associated with displaying information via an instrument cluster according to the present invention, namely: optimisation of space, legibility of information and a more effective means to indicate a change in condition then merely flashing information.

It will be appreciated by one skilled in the art that the instrument cluster of the present invention may be suitable for use in applications unrelated to vehicles.

It will also be appreciated by one skilled in the art that the preferred and/or optional features relating to the present invention may be used either alone or in appropriate combination.

### Brief Description of the Drawings

In order that the invention may be more readily understood reference is made, by way of example only, to the accompanying drawings in which:
Figure 1 is a front view of the instrument cluster of the present invention;
Figure 2 is a side perspective view from the left hand side of the instrument cluster of the present invention; and
Figure 3 is a side perspective view from the right hand side of the instrument cluster of the present invention.

The present invention related to an instrument cluster or combimeter for a vehicle and, in particular, to a combimeter with a tiered display which allows the user to view more information in a smaller packaging space.

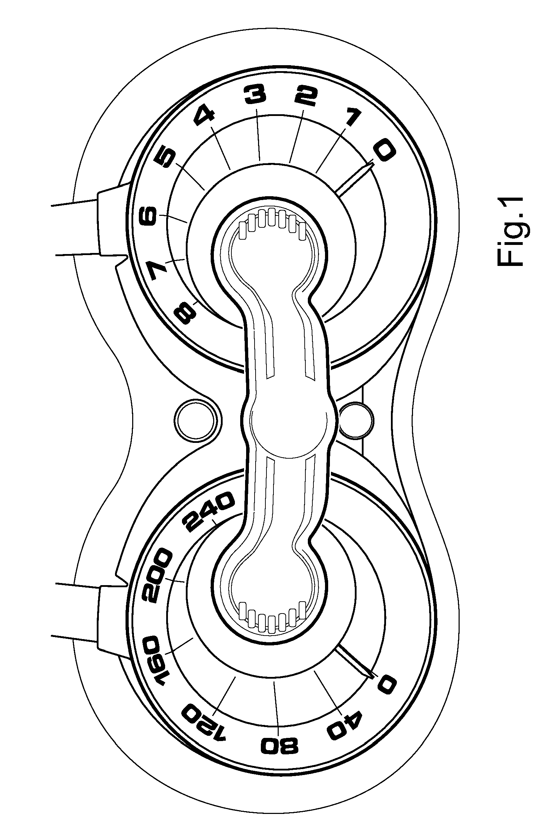

Referring to Figure 1, the driver is presented with two, generally circular dials, 10a and 10b. These dials are arranged to present information such as vehicle speed 10a and engine speed 10b. These two dials have indicia presented on bezels 11a and 11b around their perimeter relating to the information they are displaying. In the centre of each dial is a user-configurable digital display 20a and 20b, comprising a backlit LCD or OLED display on which the user may select what type and order of information is presented from a menu. Bridging these two, user-configurable digital displays, 20a and 20b, is a third, bridge-display 30, occupying otherwise unused portions of the perimeters of the two adjacent dials 10a and 10b. The dials need not be on the same plane as the bridge-display 30 may be formed three-dimensionally to arch over the top of any bezel feature 11 surrounding the dials.

The bridge-display 30 may be used to display to the driver the display-mode currently in operation to present information on the two displays 20a and 20b, in the centres of the two dials. Alternatively, the bridge-display 30 may be used to display any information from a list comprising: fuel economy, navigation data, phone list data or time.

The bridge-display 30 is used to form a linking display between the two larger displays 20a and 20b located in the centres of the two dials 10a and 10b such that information may read continuously from one of the larger displays 20a or 20b to the other 20a or 20b. This provides an attractive and highly intuitive method of displaying information about the vehicle or the journey.

Also visible in Figure 1 is an enlarged portion 35 located substantially in the centre of the bridge-display 30. This enlarged portion 30 may be used to present more information to the driver, but in the example shown in the Figure, the enlarged portion is arranged to effectively magnify the information selected by the user or scrolling across the bridge-display 30. The enlarged portion 35 may be arranged to enlarge the size of the information presented on the bridge-display 30 either by digital manipulation of the information to be displayed or by means of a lens integrated into the display surface.

In each case the views provided in the Figures are shown without a steering wheel in place to aid clarity. The dials 10a and 10b are positioned either side of a steering column (also not shown) which is covered by a column shroud 60.

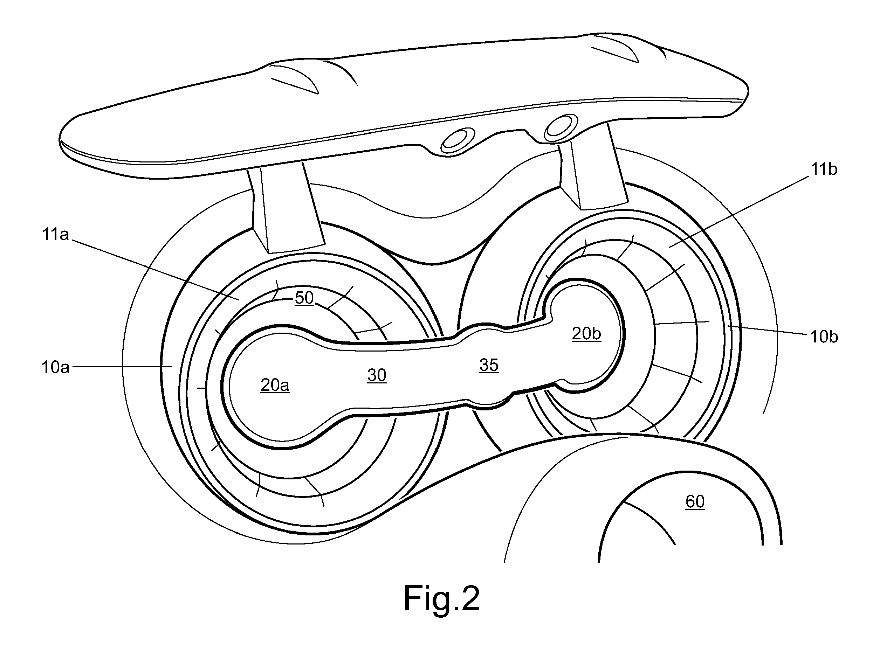

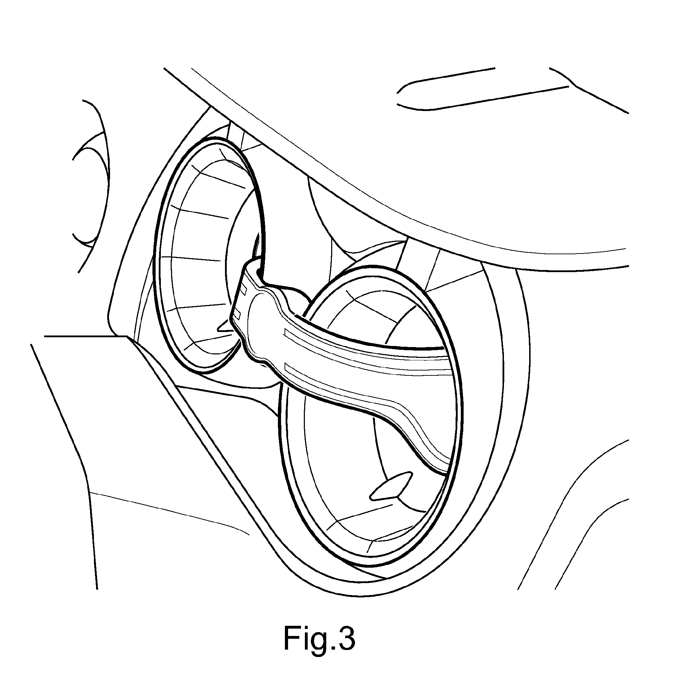

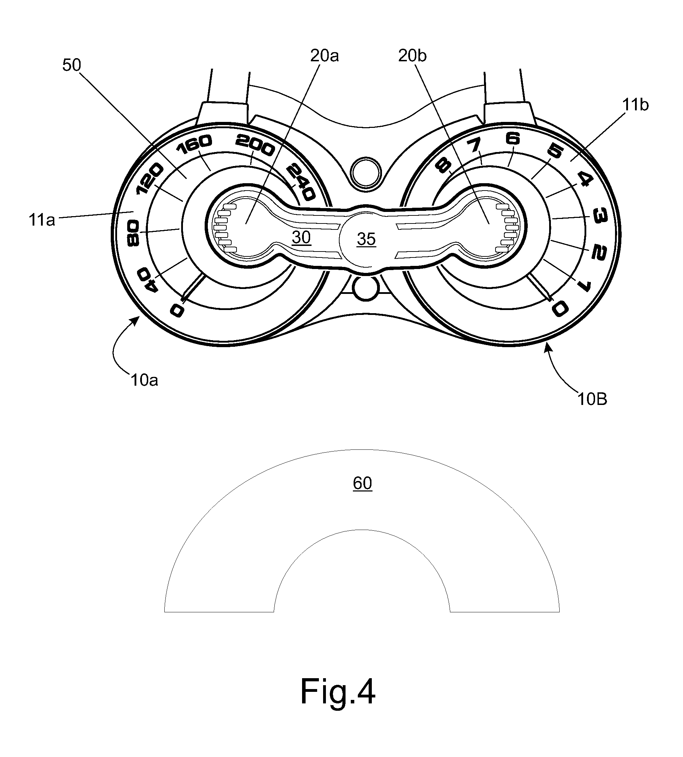

Figures 2 and 3 show an example of the instrument cluster of the present invention from either side. From Figures 2 and 3 the extent to which the bridge-display arches over the bezels 11a and 11b to provide a display surface which links the two adjacent larger displays 20a and 20b.

The information displayed and the format used to display that information via the bridge-display 30 may be configured from a menu by the user. The user may elect to set the displays 20 and 30 to present information in a static manner or alternatively the information may be scrolled across from one display to another.

In another example, not shown, the area between the bezel 12 bearing the indicia for each dial 10, and the display 20 within the dial 10 comprises another display area surrounding a periphery on the larger display 20. This additional display may be linked to the corresponding display on the other side of the instrument cluster via the display bridge 30. In this example, the display bridge is segregated into substantially horizontally orientated display zones. These zones display information between any of the displays on the left side of the instrument cluster and scroll that information to the corresponding display on the right. Once a piece of information has become critical or has been prioritised by the configuration of the user selection, it may be transferred to the enlarged portion 35 to bring it to the attention of the user.

Other advantages will be apparent to one skilled in the art and the present examples and embodiments are to be considered illustrative and not restrictive. The invention is not to be limited to the details given herein, but may be modified within the scope and equivalence of the appended claims.

## Claims

1. An instrument cluster for a vehicle comprising:
first display means for displaying first information to a driver;
second display means for displaying second information to the driver; and
third display means extending between the first and second display means and arranged to selectively display the first or second information;
wherein the third display means is curved in a plane normal to a display surface thereof such that at least a portion of the third display means is positioned closer to the driver than the first and second display means.

2. An instrument cluster as claimed in claim 1, wherein the first, second and third display means operate in the manner of a single display such that information may be scrolled:
from the first display means or the second display means to the third display means; and/or
between the first and second display means via the third display means.

3. An instrument cluster as claimed in claim 1 or claim 2, wherein the portion of the third display means that is positioned closer to the driver is a central portion of the third display means.

4. An instrument cluster as claimed in claim 3, wherein the central portion of the third display means is arranged to enlarge or otherwise emphasise information displayed thereat to the driver.

5. An instrument cluster as claimed in any preceding claim, comprising a first vehicle meter and a second vehicle meter, wherein:
the first display means comprises a central region of the first vehicle meter which at least partially surrounds the first display means; and
the second display means comprises a central region of the second vehicle meter which at least partially surrounds the second display means.

6. An instrument cluster as claimed in claim 5, wherein the first and second vehicle meters are arranged to display one or more of the following parameters:
vehicle speed, engine speed, oil temperature, oil pressure, water temperature, battery status, fuel status and drive mode.

7. An instrument cluster as claimed in any preceding claim, wherein the first and second vehicle meters are configured to present information by means of a moving dial pointer arranged to indicate a value by pointing at corresponding indicia arranged around the first and second meters, respectively.

8. An instrument cluster as claimed in any preceding claim, wherein the first and/or second information is configurable by the user.

9. An instrument cluster as claimed in any preceding claim, wherein the third display means is arranged to display the first and/or second information in a format configured by the user.

10. An instrument cluster as claimed in any preceding claim, wherein at least one of the first, second and third display means comprises a three-dimensional display surface.

11. An instrument cluster as claimed in any preceding claim, wherein at least part of the third display means is arranged to span between the first and second display means and wherein the first and second display means are arranged to display information on a first plane and the third display means arches from the first plane where it meets the first and second display means to a second plane positioned closer to the driver than the first plane.

12. A vehicle comprising a display as claimed in any preceding claim.

13. A method of presenting information, the method comprising:
displaying a first piece of information on a first information display; and
displaying a second piece of information on a second information display which is bordered on at least two sides by indicia of the first display, wherein
the second information display is divided into at least two display zones and a third information display provides a link between the two display zones to form a continuous area on which information may be displayed between the two display zones and, wherein
the third information display is curved to join the two display zones at a first plane whilst presenting at least a part of the information on a second plane on an area of the third display between the two display zones.
